# EUROPEAN PATENT APPLICATION

(11) **EP 1 234 724 A1**
(43) Date of publication of application: **28.08.2002**
(21) Application number: 01830115.0
(22) Date of filing: 21.02.2001
(51) Int. Cl.: B60R 15/04, B60R 9/06

(54) **Transportable toilet**

(71) Applicant: Nava, Guglielmo, 22063 Cantu Co (IT)
(72) Inventor: Nava, Guglielmo, 22063 Cantu Co (IT)
(74) Representative: Pizzoli, Antonio

(57) **Abstract**

Transportable toilet comprising at least one cabin (1) which is suitable for containing at least one WC (2), is arranged above a support structure (3) which can be fastened to the rear and lower portion of a vehicle (4), is provided with at least one access door (5) and has a substantially parallelepiped shape transversally arranged with respect to the driving direction of the vehicle (4), wherein the access door (5) is made in the rear wall of the cabin (1) and the WC (2) is arranged adjacent to a side wall thereof, said support structure (3) being provided with a pair of longitudinal bars (11, 11') which are mutually connected by one or more crossbars (12, 12') and are suitable for being fixed in a preferably removable manner to at least one member (13) which projects from the back of the vehicle (4).

## Description

The present invention relates to a transportable toilet, and in particular to a toilet which can be fixed to motor vehicles, for instance motor cars, small vans, coaches and the like.

US 5548856 discloses a transportable toilet which can be trailed by a motor vehicle and is provided with a plurality of cylindrical cabins, each comprising at least one WC. Since it is heavy and bulky, this known toilet makes the driving of the trailing vehicle difficult and needs a support structure provided with wheels resting on ground, so that it must be registered as a trailer, with consequent bureaucratic complications.

It is therefore an object of the present invention to provide a transportable toilet free from said disadvantages. Said object is achieved with a toilet, the main features of which are disclosed in the first claim and other features are disclosed in the subsequent claims.

Thanks to the particular support structure and to the particular cabin arranged above said support structure, the transportable toilet according to the present invention can be fastened behind a vehicle without wheels supporting it. As a matter of fact, the weight, the shape and the arrangement of the cabin and the support structure allow the cantilever fastening of the toilet, with consequent advantages relating to its transportability and its handling.

According to an aspect of the invention, the cabin can be pivoted to the support structure, so that when the vehicle is stationary, the cabin can be rotated and form an angle of about 90° with respect to the vehicle, so as to create a protected area beside the vehicle.

According to another advantageous aspect of the invention, the cabin can be provided not only with a WC, but also with a sink, an internal shower and/or an external shower.

According to a further aspect of the invention, the support structure can have different shapes and/or fixing means according to the kind of vehicle to which it is fastened, so that it can be easily adapted to each vehicle.

Further advantages and features of the transportable toilet according to the present invention will be clear to those skilled in the art from the following detailed and non-limiting description of some embodiments thereof with reference to the attached drawings wherein:
- figure 1 shows a side view of the transportable toilet according to a first embodiment of the invention;
- figure 2 shows a top view of the support structure of the toilet of figure 1;
- figure 3 shows a rear view of the toilet of figure 1;
- figure 4 shows a top view of the cabin of the toilet of figure 1;
- figure 5 shows a rear view in a cross-section according to plane V-V of the cabin of the toilet of figure 1;
- figure 6 shows a top view in a cross-section according to plane VI-VI of the cabin of the toilet of figure 1;
- figure 7 shows a perspective view of the toilet of figure 1 in the extended position;
- figure 8 shows a side view of the transportable toilet according to a second embodiment of the invention;
- figure 9 shows a perspective view of the support structure of the toilet of figure 8;
- figure 10 shows a side view of the transportable toilet according to a third embodiment of the invention;
- figure 11 shows a perspective view of the support structure of the toilet of figure 10.

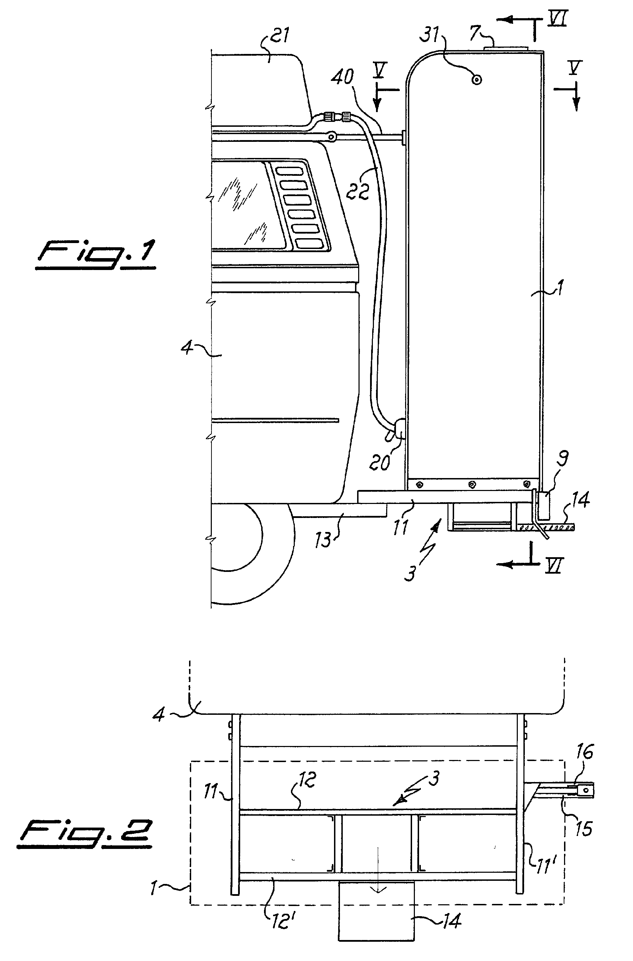

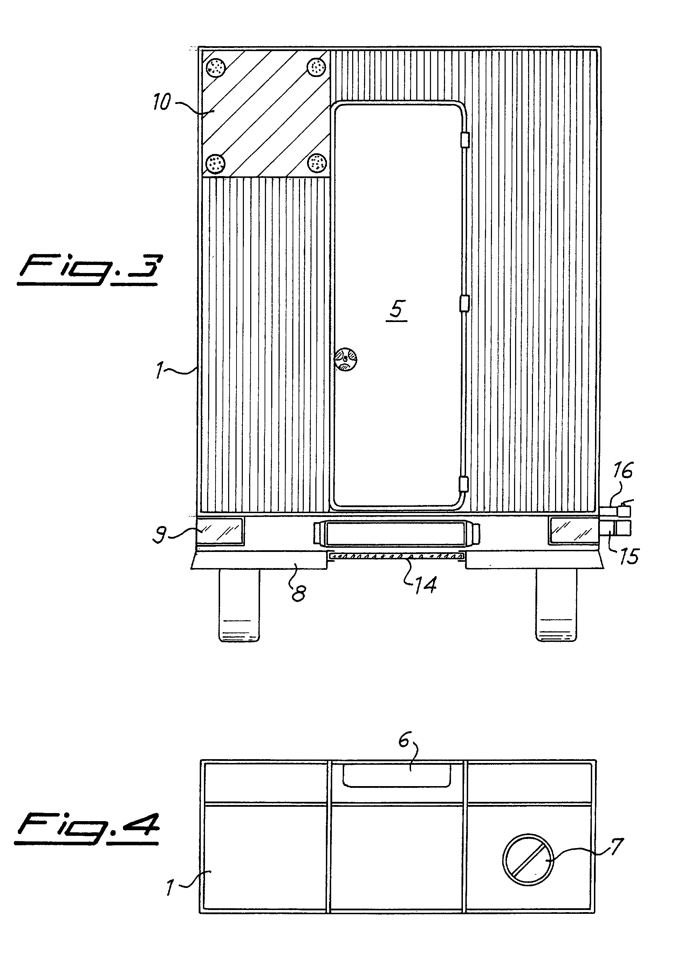

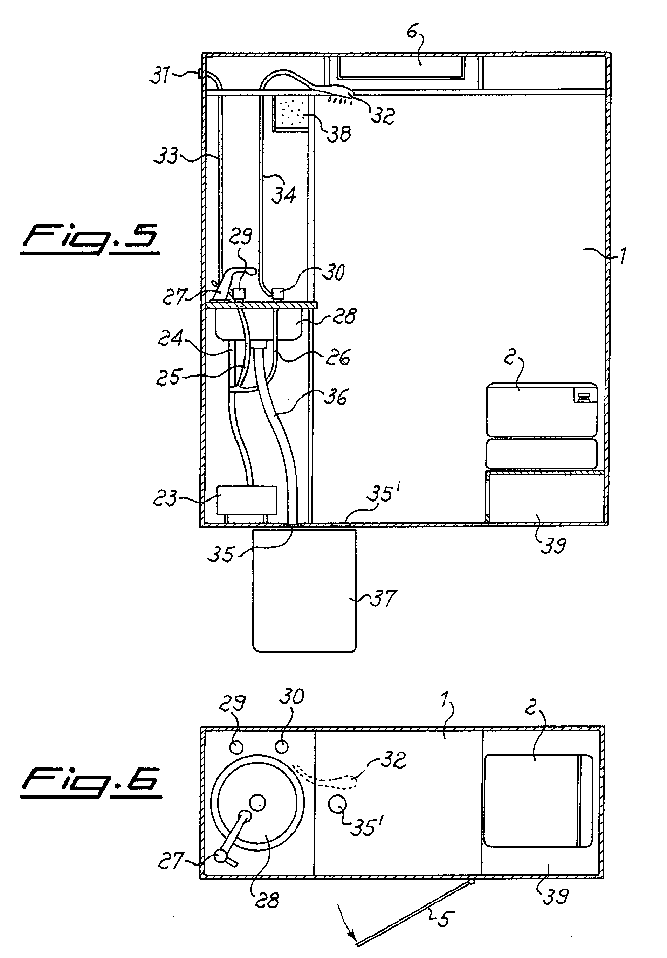

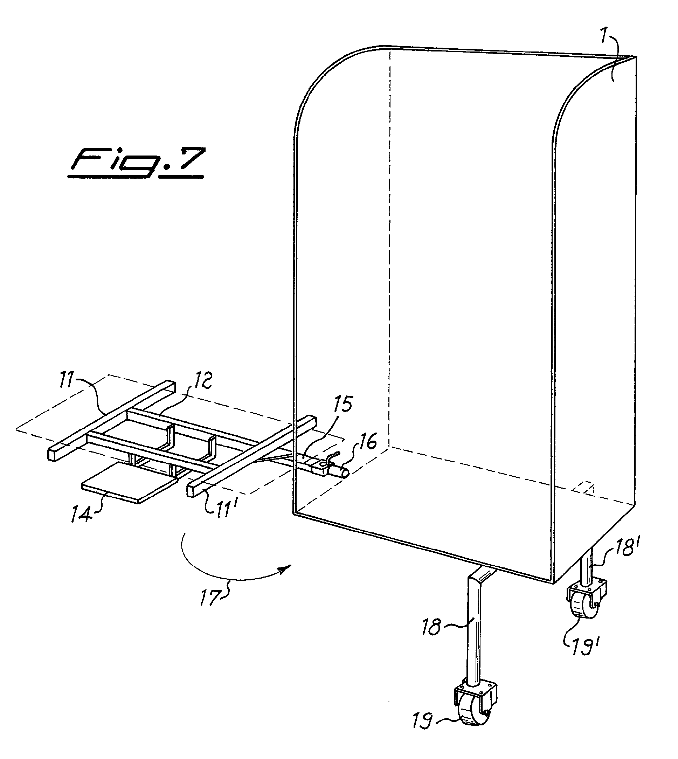

Referring to figures 1 to 7, it is seen that the transportable toilet according to the first embodiment of the invention comprises in a known way a cabin 1 which is suitable for containing at least one WC 2, for example of the chemical and portable kind. Cabin 1 rests on a support structure 3 which can be fastened to the rear and lower portion of a vehicle 4 (partially illustrated). In particular, cabin 1 has a substantially parallelepiped shape with the front and upper edge preferably rounded for improving the aerodynamics of the cabin itself, which is provided with at least one access door 5 arranged substantially in the middle of the rear wall. Furthermore, the upper portion of cabin 1 is preferably provided with a window 6 and an adjustable air intake 7, while the rear wall comprises a mudguard 8, rear lights 9, 9' controlled by vehicle 4, and a hindrance signal 10. The walls of cabin 1 can be made up of insulated sheet panels mutually jointed by means of aluminum sections.

The support structure 3 is suitably provided with a pair of longitudinal bars 11, 11' and one or more crossbars 12, 12', which are soldered to each other. The longitudinal bars 11, 11' are fixed in a preferably removable way, for instance by means of bolts, to at least one member 13 projecting from the back of vehicle 4. Member 13 can consist of the rear bumper of vehicle 4, of the frame of the latter or of a structure, in particular parallelepiped-shaped, suitable fixed under the vehicle itself. An extractable step 14 which slides along horizontal guides can be fixed under the support structure 3 for making the access to cabin 1 through door 5 easy.

In the present embodiment of the invention a bar 15 fixed to the longitudinal bar 11' projects laterally to the outside of cabin 1. A hub 16 integral with cabin 1 is pivoted to the outer end of bar 15, so that the cabin can rotate around a vertical axis in the direction indicated by arrow 17 in figure 7. At least two legs 18, 18' provided with wheels 19, 19' can be mounted under cabin 1 for supporting it when it is rotated and extended outwards.

For reducing the bending moment acting onto the support structure 3, and consequently onto member 13, the depth of cabin 1 is less than its width so that the cabin is arranged transversally with respect to the driving direction of vehicle 4. Furthermore, cabin 1 is provided with a mouth 20 for the connection to an outer water tank 21 through a tube 22. Tank 21 is preferably arranged on vehicle 4, so that its weight does not load upon cabin 1. An electric pump 23, in particular powered by the battery of vehicle 4, is connected to mouth 20 for pumping the water of tank 21 to one or more delivery ducts 24, 25 and 26 respectively connected to a faucet 27 of a sink 28 and to a pair of valves 29, 30. Valves 29 and 30 respectively controls the water inflow to a mouth 31 and to a shower 32 through a pair of ducts 33 and 34. Shower 32 is arranged inside cabin 1, while mouth 31 is arranged outside cabin 1 on its side wall opposite to the side wall provided with arm 16, so that an external shower (not shown in the figure) can be connected to mouth 31 when cabin 1 is extended. The base of cabin 1 is provided with two draining openings 35 and 35', the first connected to sink 28 through a draining duct 36 and the second arranged below shower 32. During the use, a vessel 37 can be arranged under openings 35 and 35' for collecting the water drained by them. For reducing the depth of cabin 1, sink 28 is arranged adjacent to a side wall of the cabin itself, while WC 2 is arranged adjacent to the opposite side wall. Above sink 28 is arranged a light 38, preferably powered by the battery of vehicle 4, while under WC 2 is arranged a multi-purpose container 39. For improving the stability of cabin 1 during the transport, its front wall can be provided with a pair of auxiliary arms 40 which project toward the upper portion of vehicle 4 and are fixed in a preferably removable way to the latter, for instance by means of bolts.

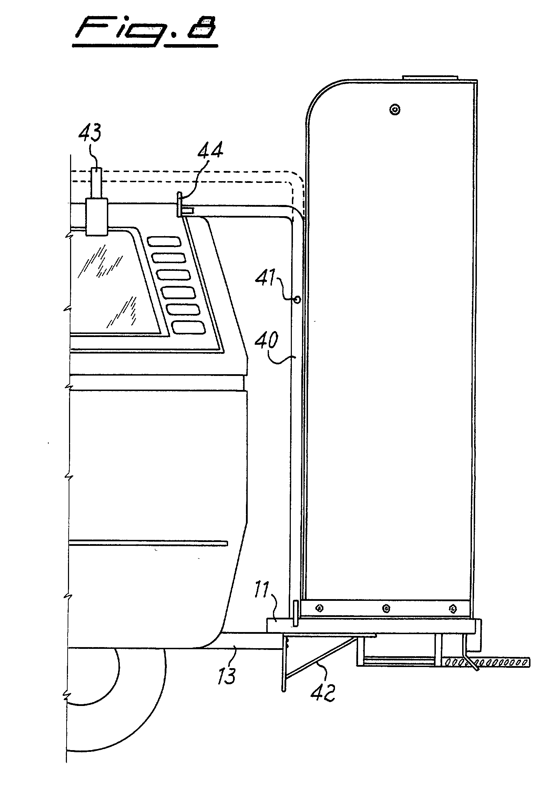

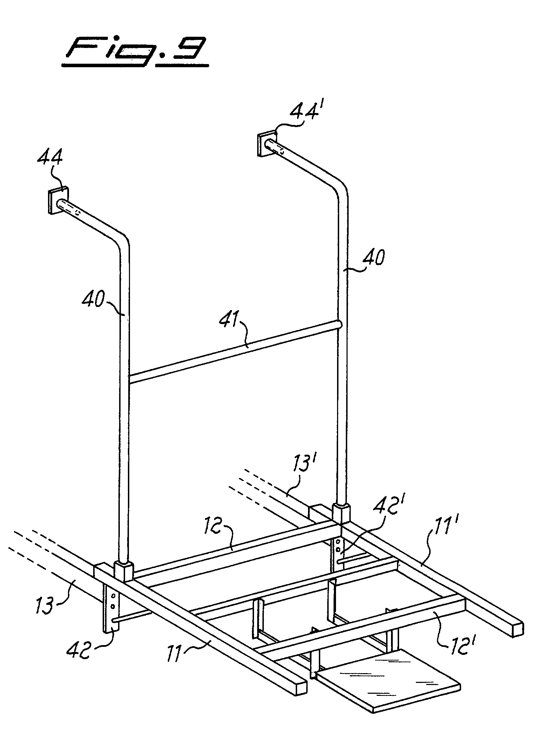

Referring now to figures 8 and 9, it is seen that in a second embodiment of the invention the auxiliary arms 40 are L-shaped and are prolonged downwards, so as to be fixed not to cabin 1 but to the longitudinal bars 11, 11' of the support structure 3. Furthermore, a longitudinal bar 41 connects the auxiliary arms 40 about in the middle of their height, so as to improve the solidity of the whole support structure 3. In this embodiment, the longitudinal bars 11, 11' are fixed by means of a pair of angular brackets 42, 42' to the same number of member 13, 13' projecting from the back of vehicle 4, for instance consisting of the frame bars supporting the rear bumper, which is dismounted for this purpose. The free ends of arms 40 can be fixed to a parcel crossbar 43 of vehicle 4 or be provided with plates 44, 44' to be fixed to the upper and rear portion of the vehicle itself.

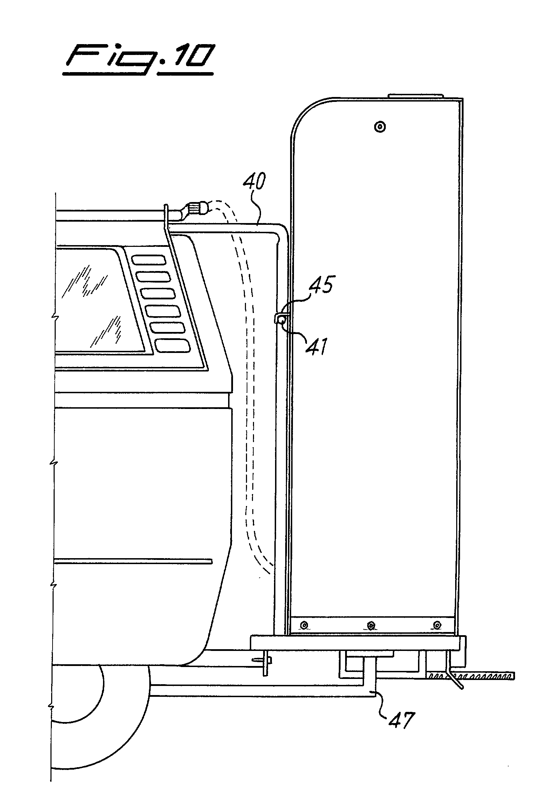

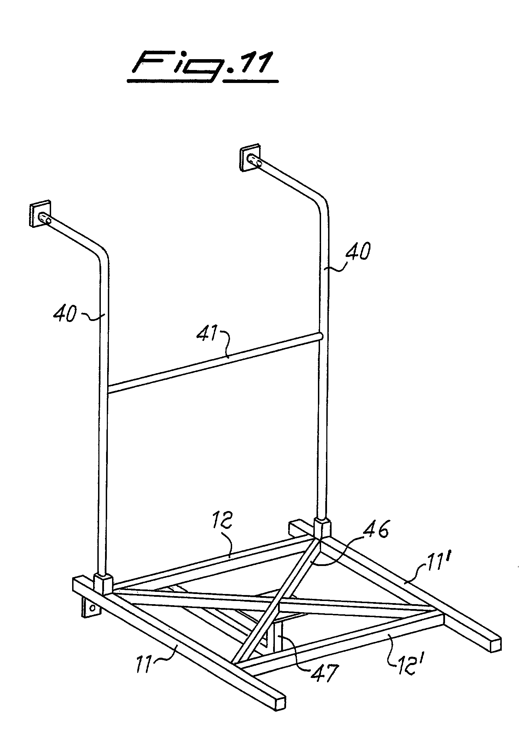

Referring finally to figures 10 and 11, it is seen that in a third embodiment of the invention the auxiliary arms 40 are always L-shaped and are prolonged downwards, while the front wall of cabin 1 is provided with hooks 45 for fastening to the horizontal bar 41 connecting arms 40. The longitudinal bars 11, 11' and crossbars 12, 12' of the support structure 3 are mutually connected by a reinforcement cross 46, under which a longitudinal L-shaped member 47 turned towards vehicle 4 is fixed. The free end of longitudinal member 47 can be fixed in a preferably removable manner under vehicle 4, in particular in the seat provided for the trailer hitch of caravans and the like.

## Claims

1. Transportable toilet comprising at least one cabin (1) which is suitable for containing at least one WC (2), is arranged above a support structure (3) which can be fastened to the rear and lower portion of a vehicle (4) and is provided with at least one access door (5), **characterized in that** said cabin (1) has a substantially parallelepiped shape transversally arranged with respect to the driving direction of the vehicle (4), wherein the access door (5) is made in the rear wall of the cabin (1) and the WC (2) is arranged adjacent to a side wall thereof, said support structure (3) being provided with a pair of longitudinal bars (11, 11') which are mutually connected by one or more crossbars (12, 12') and are suitable for being fixed in a preferably removable manner to at least one member (13, 13') which projects from the back of the vehicle (4).

2. Toilet according to the previous claim, **characterized in that** said member (13, 13') projecting from the back of the vehicle (4) consists of its rear bumper, of a part of its frame or of a fixed structure suitably fixed under the vehicle itself.

3. Toilet according to one of the previous claims, **characterized in that** an extractable step (14) which slides along horizontal guides is fixed under the support structure (3).

4. Toilet according to one of the previous claims, **characterized in that** a bar (15) fixed to the support structure (3) projects laterally to the outside of the cabin (1), wherein a hub (16) integral with the cabin itself is pivoted to the outer and free end of this bar (15), so that the cabin can rotate around a vertical axis.

5. Toilet according to claim 4, **characterized in that** at least two legs (18, 18') provided with wheels (19, 19') are mounted under the cabin (1) in the extended position.

6. Toilet according to one of the previous claims, **characterized in that** the cabin (1) is provided with a mouth (20) for the connection to an outer water tank (21) preferably arranged on the vehicle (4), as well as with an electric pump (23) connected to the mouth (20) for pumping the water of the tank (21) to one or more delivery ducts (24, 25 and 26) arranged inside the cabin (1).

7. Toilet according to claim 6, **characterized in that** a delivery duct (24) is connected to the faucet (27) of a sink (28) arranged adjacent to the side wall of the cabin (1) opposite with respect to the WC (2).

8. Toilet according to claim 6 or 7, **characterized in that** a delivery duct (25) is connected to a valve (29) which controls the water inflow to a mouth (31) arranged outside the cabin (1).

9. Toilet according to one of claims 6 to 8, **characterized in that** a delivery duct (26) is connected to a valve (30) which controls the water inflow to a shower (32) arranged inside the cabin (1).

10. Toilet according to one of the previous claims, **characterized in that** the front wall of the cabin (1) is provided with a pair of auxiliary arms (40) which project toward the vehicle (4) and are fixed to the latter in a preferably removable way.

11. Toilet according to one of the previous claims, **characterized in that** the support structure (3) comprises a pair of L-shaped auxiliary arms (4) which project toward the vehicle (4) and are fixed to the latter in a preferably removable way.

12. Toilet according to claim 10 or 11, **characterized in that** the free ends of the auxiliary arms (40) are provided with plates (44, 44') to be fixed to the upper and rear portion of the vehicle (4).

13. Toilet according to one of claims 10 to 12, **characterized in that** the front wall of the cabin (1) is provided with hooks (45) for fastening to a horizontal bar (41) which connects the auxiliary arms (40).

14. Toilet according to one of the previous claims, **characterized in that** the longitudinal bars (11, 11') and the crossbars (12, 12') of the support structure (3) are mutually connected by a reinforcement cross (46), under which a longitudinal L-shaped member (47) turned towards the vehicle (4) is fixed.
